# EUROPÄISCHE PATENTSCHRIFT

(11) **EP 2 454 305 B1**
(45) Veröffentlichungstag und Bekanntmachung des Hinweises auf die Patenterteilung: **24.04.2013**
(21) Anmeldenummer: 10747568.3
(22) Anmeldetag: 13.07.2010
(51) Int. Cl.: C08G 18/42, C09D 175/06

(54) **BESCHICHTUNGSSTOFFZUSAMMENSETZUNG UND DEREN VERWENDUNG**
COATING MATERIAL COMPOSITION AND USE THEREOF
COMPOSITION D'UNE MATIÈRE DE REVÊTEMENT ET SON UTILISATION

(30) Priorität: 14.07.2009 DE 102009033194
(43) Veröffentlichungstag der Anmeldung: 23.05.2012
(73) Patentinhaber: Mankiewicz Gebr. & Co. GmbH & Co. KG, 21107 Hamburg (DE)
(72) Erfinder: KOOPMANN, Ingo, 22527 Hamburg (DE); SZAMOCKI, Mario, 21698 Harsefeld (DE); WILDE, Heinz-Wilhelm, 59368 Werne (DE); BÖHM, Alexander, 21397 Vastorf (DE)
(86) Internationale Anmeldenummer: PCT/DE2010/000802
(87) Internationale Veröffentlichungsnummer: WO 2011/006476

(56) Entgegenhaltungen:
- EP-A1- 0 469 389
- EP-A1- 0 669 352
- EP-A2- 0 926 172
- EP-A2- 1 481 998
- EP-A2- 1 958 995

## Beschreibung

Die vorliegende Erfindung betrifft eine Beschichtungsstoffzusammensetzung insbesondere mit Softfeel-Effekt und deren Verwendung als Einschicht- oder Mehrschichtlackierung von Holz-, Glas-, Keramik-, Kunststoff- und Metallsubstraten.

Unter der Bezeichnung Softfeeling-Lacke oder Softfeel-Lacke werden Lacke bzw. Beschichtungen verstanden, die sich durch eine besondere Haptik auszeichnen. Der Softfeel-Effekt beruht dabei im Wesentlichen auf einer Kombination von Brems- und Gleitwirkung. Hierdurch erhält man beim Anfassen eines mit einem Softfeel-Lack beschichteten Gegenstands den Eindruck, einen leder- oder samtähnlichen Gegenstand zu berühren, unabhängig von dem eigentlichen Griffgefühl des Substrats.

Softfeel-Lacke werden vor allem für die Lackierung von Metall- oder Kunststoffteilen eingesetzt. Insbesondere werden Softfeel-Lacke zur Lackierung von Bauteilen für den Innenausbau von Fahrgastzellen eingesetzt. So werden im Automobil-Innenbereich beispielsweise Interieurbauteile wie Tür- und Wandverkleidungen, Armaturenbretter, Abdeckungen sowie Fenster- und Türgriffe mit Softfeel-Lacken beschichtet, um ihren Oberflächen eine angenehme und hochwertige Haptik zu verleihen.

Übliche Softfeel-Lacke sind ein- oder zweikomponentig. Sie basieren auf lösemittel- oder wasserverdünnbaren Bindemitteln insbesondere Polyurethanen und Polyacrylaten. Um die notwendige Haftung auf Kunststoffoberflächen zu erhalten, wird in wasserverdünnbaren Systemen N-Methylpyrrolidon (NMP) als Cosolvens oder Co-Lösemitttel eingesetzt. N-Methylpyrrolidon bewirkt unter anderen eine Quellung und Anlösung der Kunststoffoberfläche, so dass eine bessere Haftung der Beschichtung am Substrat erreicht wird. Besonders bei wasserverdünnbaren Beschichtungen, die nur einschichtig aufgebracht werden, ist bislang eine ausreichende Haftung der Beschichtung ohne N-Methylpyrrolidon nicht zu erhalten. N-Methylpyrrolidon weist darüber hinaus gute Lösungseigenschaften auf, so dass es üblicherweise auch schon in den Herstellverfahren der Bindemitteldispersionen selbst eingesetzt wird. Die Anwesenheit von Resten des Lösemittels stört in diesem Fall die weitere Verwendung nicht, so dass auf eine aufwändige Abtrennung oder Reinigung verzichtet werden kann.

Allerdings wurde in der letzten Zeit festgestellt, das N-Methylpyrrolidon toxikologisch und ökologisch bedenklich ist. Es wird mittlerweile in verschiedenen toxikologischen und ökologischen Klassifikationen als nachteilig eingestuft.

Ziel der vorliegenden Erfindung ist es daher, eine Beschichtungsstoffzusammensetzung bereitzustellen, welche unter Beibehaltung der üblichen Eigenschaften frei von N-alkylierten Pyrrolidonen, insbesondere N-Methylpyrrolidon, ist. Ziel ist insbesondere die Bereitstellung eines wasserverdünnbaren Softfeel-Lackes, welcher auch bei einschichtiger Applikation die üblichen Anforderungen an einen Automobil-Interieur-Lack erfüllt.

Dieses Ziel wird durch eine Beschichtungsstoffzusammensetzung gemäß Anspruch 1 und deren Verwendung gemäß Anspruch 17 erreicht. Weitere Ausführungsformen sind Gegenstand der Unteransprüche und der Beschreibung.

Die erfindungsgemäßen Zusammensetzungen enthalten 10 bis 50 % (w/w) der wässrigen Polyurethandispersion, bis zu 20 % (w/w) des Co-Lösemittels und bis zu 20 % (w/w) eines weichmachenden Bindemittels. Die im Folgenden genannten Prozentangaben sind, soweit nicht anders gekennzeichnet, Gewichtsprozent bezogen auf das Gesamtgewicht der Zusammensetzung. Darüber hinaus sind die erfindungsgemäßen Beschichtungszusammensetzungen frei von N-alkylierten Pyrrolidonen, insbesondere von N-Methylpyrrolidon und N-Ethylpyrrolidon.

In einer bevorzugten Ausführungsform der vorliegenden Erfindung enthält die Zusammensetzung 20 bis 40, bevorzugt 25 bis 35 % (w/w) einer Polyurethandispersion. Bindemittelanteile über 50 % (w/w) verschlechtern die Haptik. Bindemittelanteile unter 10 % (w/w) bewirken eine Verschlechterung der Haftung und Beständigkeit der Beschichtung.

Erfindungsgemäß werden handelsübliche Polyurethandispersionen mit einen Festkörpergehalt zwischen 20 und 60 %, bevorzugt zwischen 30 und 50 %, eingesetzt. Diese Polyurethandispersionen basieren auf Polyurethanen wie beispielsweise Polyesterpolyurethanen, Polyetherpolyurethanen, Polycarbonatpolyurethanen, Polyacrylat-polyurethanen und deren Gemischen. Dabei weist die erfindungsgemäß eingesetzte Polyurethandispersion einen aromatischen Anteil von 40 bis 60 % (w/w) bezogen auf das wasserfreie Polyurethan auf. Die erfindungsgemäßen Polyurethandispersionen sind bevorzugt frei von Triethylamin, Dimethylsulfoxid, Formaldehyd, PVC, Nitrocellulose, chlorierten und halogenierten Kohlenwasserstoffen.

Besonders bevorzugt werden aromatische Polyesterpolyurethane eingesetzt beispielsweise auf der Basis folgender Monomere: ortho-Phthalsäure, Isophthalsäure, Terephthalsäure, Trimellitsäure, Bisphenol A, Bisphenol F, funktionalisierte und unfunktionalisierte Bisphenole, difunktionelle Phenole, Aniline, Bis-Aniline, Naphthaline und aromatisch substituierte Vinylverbindungen. Erfindungsgemäß besonders bevorzugt sind Polyesterpolyurethane, welche aus aromatischen monomeren Komponenten wie z.B. *ortho*-Phthalsäure, Isophthalsäure und/oder Terephthalsäure und aliphatischen Komponenten wie z.B. Hexandiol hergestellt sind.

Die Beschichtungsstoffzusammensetzung enthält weiterhin ein oder mehrere Isocyanate. Geeignete Isocyanate sind alle üblicherweise zur Härtung von Beschichtungsstoffen eingesetzte Isocyanate wie zum Beispiel Diphenylmethandiisocyanat (MDI) sowie Oligomere oder Polymere auf Basis von Toluylendiisocyanat (TDI), Diphenylmethandiisocyanat (MDI), Hexamethylendiisocyanat (HDI), Isophorondiisocyanat (IPDI), 4,4'-Diisocyanatodicyclohexylmethan (HMDI), m-Xylylendiisocyanat (XDI), 1,6-Diisocyanato-2,2,4(2,4,4)-trimethylhexan (TMDI) oder Tetramethylxylylendiisocyanat (TMXDI). Darüber hinaus sind auch isocyanatofunktionelle Reaktionsprodukte von Diisocyanaten mit ein- oder mehrwertigen Alkoholen wie beispielsweise das Reaktionsprodukt von Trimethylolpropan mit einem Überschuß an Toluylendiisocyanat (z.B. unter dem Handelsnamen "Desmodur L" der Bayer AG erhältlich) geeignet. Ebenso geeignet sind blockierte Polyisocyanate und mikroverkapselte Polyisocyanate. Weiterhin können die Isocyanate und ihre Oligomere und Polymere durch Polyetherketten oder durch Cyclohexylaminopropionsulfonsäure hydrophiliert sein. Auch Mischungen der genannten Isocyanate sind einsetzbar.

Erfindungsgemäß bevorzugt werden die Isocyanate als eine zweite Komponente der Zusammensetzung erst kurz vor der Applikation mit der ersten Komponente vermischt, wobei die erste Komponente die restlichen Bestandteile der Zusammensetzung enthält. Die erfindungsgemäße erste Komponente enthält dann 10 bis 50 % (w/w) der wässrigen Polyurethandispersion, bis zu 20 % (w/w) des Co-Lösemittels und bis zu 20 % (w/w) eines weichmachenden Bindemittels, jeweils bezogen auf das Gesamtgewicht der ersten Komponente. Im 2-komponentigen Fall wird die erste Komponente, der Stammlack, mit der zweiten Komponente, dem Härter, während der Trocknung oder Aushärtung vernetzt.

Softfeel-Lacke basieren auf nicht oder niedrig vernetzenden Polyacrylat- oder Polyurethandispersionen. Durch den niedrigen Vernetzungsgrad wird die für den Softfeel-Effekt gewünschte Weichheit und Flexibilität der Beschichtung erreicht. Höhere Vernetzungsgrade führen zwar zu einer verbesserten Chemikalienbeständigkeit, ergeben aber insbesondere bei niedrigen Glanzgraden eine erhöhte Kratz- und Schreibempfindlichkeit der Lackoberfläche. Kratzempfindliche Oberflächen sind gerade bei starker mechanischer Beanspruchung wie z.B. an Schaltern oder Türgriffen und anderen häufig berührten Teilen besonders nachteilig.

Übliche Softfeel-Lacke sind bei 1-schichtiger Applikation auf Kunststoffsubstraten nicht beständig gegen kosmetische Emulsionen wie Hautcremes oder Sonnenschutzcremes. Die Einwirkung dieser Emulsionen auf die beschichteten Oberflächen durch das Berühren mit eingecremten Händen führt zu starken Schädigungen der Beschichtung wie Lackerweichung, Anquellen der Oberfläche und Haftungsdefiziten bis hin zur völligen Enthaftung der Beschichtung. Nach der vollständigen Zerstörung der Beschichtung oder deren Oberfläche kann es auch zur Schädigung des darunterliegenden Kunststoffsubstrats kommen.

Überraschenderweise wurde festgestellt, dass die erfindungsgemäßen Zusammensetzungen im Vergleich zu N-Methylpyrrolidon-haltigen Zusammensetzungen bei einschichtiger Applikation eine unerwartet hohe Beständigkeit gegenüber Cremes aufweisen.

Die erfindungsgemäßen Beschichtungen erfüllen auch nach dem Kontakt mit Cremes die gestellten Anforderungen wie die Ergebnisse der Gitterschnittprüfung, der Erichsen-Ritzhärte-Prüfung und des Kondenswasserkonstantklima-Tests zeigen.

Die erfindungsgemäße Zusammensetzung umfasst weiterhin 0 bis 20 % (w/w) einer lacküblichen Acrylatdispersion als Cobindemittel.

In einer weiteren bevorzugten Ausführungsform weisen die erfindungsgemäßen Zusammensetzungen 1 bis 15 % (w/w), bevorzugt 1 bis 8 % (w/w) eines Co-Lösemittels auf. Geeignete Co-Lösemittel neben den Glykolethern sind beispielsweise aliphatische Kohlenwasserstoffe, aromatische Kohlenwasserstoffe, hydroaromatische Kohlenwasserstoffe, Terpenkohlenwasserstoffe, Ketone ausgenommen N-Alkylpyrrolidone wie N-Methylpyrrolidon, Alkylester, Alkylether. Bevorzugt sind Glykolether mit Molmassen unter 400 g/mol, besonders bevorzugt unter 250 g/mol. Insbesondere bevorzugt ist dabei Dimethylglykolether wie Dimethoxytetraglykol.

In einer weiteren bevorzugten Ausführungsform weist die erfindungsgemäße Zusammensetzung 5 bis 15 % (w/w) weichmachende Bindemittel auf. Als weichmachende Bindemittel werden im Folgenden isocyanatvernetzbare, weichmachende Substanzen bezeichnet wie beispielsweise Polyalkylenglykole, polymere und oligomere Carbonsäurederivate, Phosphorsäurederivate, chlorierte Polyolefine und/oder unsubstituierte aliphatische und aromatische Kohlenwasserstoffe. Besonders geeignete weichmachende Bindemittel sind Phthalsäureester, polymere und oligomere Adipinsäureester, polymere und oligomere Sebacinsäureester, Citronensäurealkylester, Fettsäurederivate, epoxidierte Fettsäurederivate und/oder Benzoesäureester. Weitere, geeignete weichmachende Bindemittel sind Polyalkylenglykole, wobei Polyalkylenglykole mit einer mittleren Molmasse von 200 bis 800 g/mol bevorzugt sind. Besonders bevorzugt sind Polyalkylenglykole mit einer Molmasse von 300 bis 600 g/mol. Vorteilhaft sind wassermischbare und/oder mono-, di- oder höher funktionelle Polyalkylenglykole, wobei die Funktionalität auf gegenüber Isocyanat reaktive Protonen bezogen ist. Darüber hinaus können die Polyalkylenglykole linear oder verzweigt sein. Besonders bevorzugt ist Polyethylenglykol mit einer mittleren Molmasse von 400 g/mol.

Weiterhin weisen die erfindungsgemäßen Beschichtungsstoffzusammensetztungen 1 bis 10 % (w/w), bevorzugt 2 bis 7 % (w/w), besonders bevorzugt 3 bis 5 % (w/w), Mattierungsmittel auf. Geeignete Mattierungsmittel sind Silikate, Phenolharz-Kondensationsprodukte, Polyethylen-, Polyamid- und Polypropylenwachse, perfluorierte Polymere, Bienenwachse, Carnaubawachse, nicht kristalline, natürliche Kieselgure oder Diatomeenerden und deren Gemischen, wobei Silikate bevorzugt sind.

Weiterhin weisen die erfindungsgemäßen Zusammensetzungen 0 bis 10 % (w/ w), bevorzugt 0 bis 5 % (w/w), Farbmittel auf. Geeignete Farbmittel sind beispielsweise die dem Fachmann geläufigen, lacküblichen anorganischen und organischen Pigmente z.B. Ruß, Titandioxid und/oder Eisenoxide. Bevorzugt werden Pigmente mit einer Kornfeinheit von 0,2 bis 50 µm, besonders bevorzugt von 5 bis 30 µm eingesetzt.

Weiterhin weisen die erfindungsgemäßen Zusammensetzungen 0 bis 20 % (w/w), bevorzugt 0 bis 15 % (w/w), Füllstoffe auf. Geeignete Füllstoffe sind beispielsweise oxidische, carbonatische, sulfatische, silikatische Füllstoffe mit Alkali- oder Erdalkalikationen sowie Kationen der dritten und vierten Hauptgruppe des Periodensystems der Elemente als Gegenionen.

Die erfindungsgemäßen Zusammensetzungen können weiterhin bis zu 20 % (w/w), bevorzugt 1 bis 10% (w/w), lackübliche, dem Fachmann geläufige Additive enthalten wie z.B. Verdicker, Verlaufshilfsmittel, Dispergierhilfsmittel und/oder Lichtschutzmittel.

In einem weiteren Aspekt wird das Ziel der vorliegenden Erfindung durch die Verwendung der erfindungsgemäßen Beschichtungsstoffzusammensetzungen zum Beschichten von Holz-, Glas-, Keramik,- Metall- und Kunststoffsubstraten erreicht.

Die erfindungsgemäßen Zusammensetzungen sind insbesondere zur Lackierung von Kunststoffsubstraten geeignet, die hergestellt sind aus beispielsweise Acryl-Butadien-Styrol Copolymerisat (ABS), Acryl-Butadien-Styrol Copolymerisat/Polycarbonat (ABS/PC), Polycarbonat (PC), Acrylnitril-Styrol-Acrylester (ASA), ungefülltem und gefülltem z.B. mit Talkum Polypropylen (PP), ungefülltem und gefülltem z.B. mit Glasfasern oder -kugeln Polyamid (PA), Polyoxymethylen (POM), Polybutylenterephthalat (PBT), thermoplastischen Polyester-Elastomeren (TPEE) und/oder Ethylen-Propylen-Dien-Kautschuk (PP/EPDM PP).

Die erfindungsgemäßen Beschichtungszusammensetzungen können mit den üblichen Applikationsverfahren, wie sie dem Fachmann geläufig sind, verarbeitet werden. Geeignet sind beispielsweise Applikationsverfahren, bei denen der Beschichtungsstoff bzw. Lack pneumatisch zerstäubt wird. Der Lackauftrag kann in manueller Lackierung oder mit einem Spindelautomaten bei rotierendem Warenträger mit fixiertem oder vertikal bewegtem Spritzapparat erfolgen. Darüber hinaus kann der Lackauftrag auch mit einem Flächenlackierautomaten mit mehr als 4 Spritzapparaten oder durch Roboterapplikation jeweils in vertikaler oder horizontaler Applikation und jeweils in getakteten Prozessen oder Durchlaufprozessen erfolgen. Die Vermischung der Komponenten erfolgt dabei manuell oder automatisch. Zur Vermischung können statische oder dynamische Mischer eingesetzt werden.

Die zur Zerstäubung verwendeten Düsen haben einen Durchmesser von 0,5 bis 1,6 mm. Der eingesetzte Zerstäuberluftdruck beträgt 2 bis 6 bar Überdruck (entspricht 3 bis 7 bar Absolutdruck), bevorzugt 3 bis 4 bar Überdruck. Der bei der Verarbeitung des Lackes verwendete Materialdruck beträgt üblicherweise 0,1 bis 25 bar Überdruck, wobei die bevorzugte Umgebungstemperatur bei der Verarbeitung des Lackes bei 18 bis 28 °C liegt. Die bevorzugte Luftfeuchtigkeit bei der Verarbeitung des Lackes beträgt 40 bis 70 % r.F. (relative Feuchte). Die bevorzugte Temperatur des Lackes selbst (Materialtemperatur) liegt zwischen 18 und 28 °C.

Die Bauteile werden nach erfolgter Lackierung bei einer Ablüfttemperatur zwischen 20 und 50°C für eine Zeit von 5 bis 30 Minuten belassen und anschließend bei einer Trocknungstemperatur von 70 bis 120 °C, bevorzugt bei 80 °C, ausgehärtet. Die zugehörige Trocknungs- oder Härtungsdauer beträgt 10 bis 60 Minuten, bevorzugt 30 Minuten (bei 80 °C).

Die erfindungsgemäßen Beschichtungszusammensetzungen sind insbesondere geeignet zur Lackierung von Automobil-Interieurteilen, Bedarfsgegenständen oder Teilen davon insbesondere Kunststoffteilen wie z.B. Staubsauger, Küchengeräte, Lampenschirme, Möbel, Pflanzbehälter oder Sport- und Gartengeräte, Gehäuse von elektrischen und elektronischen Geräten wie z.B. Rasierern, Radios, TV- und HiFi-Geräte, Telefone, Computer oder Tasturen, sowie Verpackungen wie z.B. Kunststoffflaschen.

### Beispiele

### Rezeptur 1 (erfindungsgemäß)

| **Anteil [Massen%]** | **Rohstoff** |
|---|---|
| Stammlack: | |
| 30 | OH-funktionelle, wässrige Polyesterpolyurethan (PES-PUR-)-Dispersion auf Basis Phthalsäure/ Hexandiol/ Adipinsäure/ Hexamethylendiisocyanat (Festkörpergehalt: 50 % w/w) |
| 4,5 | wässrige Acrylatdispersion (Festkörpergehalt: 35% w/w) |
| 4,5 | OH-funktionelle, wässrige Polyester-Polycarbonat Polyurethan-Dispersion (Festkörpergehalt: 55% w/w) |
| 8 | OH-funktionelles Polyethylenglykol (OH-Gehalt: 8 % w/w bezogen auf die Masse des Polyethylenglykols) |
| 4 | silikatisches Mattierungsmittel |
| 6 | Co-Lösemittel |
| 0,3 | Entschäumer |
| 2,5 | Lichtschutzmittel |
| 1 | Wachs |
| 0,3 | Verdicker |
| 1 | Dispergieradditiv |
| 1 | Rußpigment |
| 36,9 | Wasser |
| 100 | |
| | |

| Härter: | |
|---|---|
| 64 | Hexamethylendiisocyanat (HDI)-Iminooxadiazindion |
| 16 | Hexamethylendiisocyanat (HDI)-Trimerisat mit Cylohexylaminopropiosulfonsäure hydrophiliert |
| 20 | Butylacetat |
| 100 | |

### Rezeptur 2 (Vergleichsbeispiel)

| **Anteil [Massen%]** | **Rohstoff** |
|---|---|
| Stammlack: | |
| 33 | wässrige, aliphatische PES-PUR-Dispersion |
| 18 | niedrigfunktionelles, aliphatisches OH-funktionelles Polyesterpolyol (80 %w/w in N-Methylpyrrolidon) |
| 0,2 | Entschäumer |
| 0,4 | Benetzungsadditiv (Byk 348, Fa. Byk Chemie) |
| 0,3 | Benetzungsadditiv (Tego Wet K1245, 50 % in H₂O, Fa. Evonik) |
| 1,3 | Wachs (Aquacer 535, Fa. Byk Chemie) |
| 0,8 | Lichtschutzmittel (Tinuvin 292, 75 % in Butyldiglykol, Fa. Ciba) |
| 1,5 | wässrige Dispersion von Dibutylzinndilaurat (Borchers LH 10, 10% 1ff., Fa. Borchers) |
| 3,0 | Füllstoff (Silitin 786, Fa. Hoffman u. Söhne) |
| 4,5 | Mattierungsmittel (Pergopak M3, Fa. Martinswerk) |
| 12 | Bayferrox 318 M |
| 1,5 | Mattierungsmittel (Acematt OK 412, Fa. Evonik) |
| 23,5 | Wasser |
| 100 | |
| | |

| Härter: | |
|---|---|
| 64 | Hexamethylendiisocyanat (HDI)-Iminooxadiazindion |
| 16 | Hexamethylendiisocyanat (HDI)-Trimerisat mit Cylohexylaminopropiosulfonsäure hydrophiliert |
| 20 | Butylacetat |
| 100 | |

Entsprechend den Rezepturen 1 und 2 werden, wie in der Lackherstellung üblich, jeweils Stammlack und Härter des Beschichtungsstoffes bzw. Lackes hergestellt und nach Vermischung im Verhältnis Masse Stammlack : Masse Härter von 100 : 20 durch Sprühapplikation auf Kunststoffplatten aus einem Blend von Acrylnitril-Butadien-Styrol-Copolymerisaten mit Polycarbonat (Bayblend T 65, Fa. Bayer) aufgebracht und bei 80 °C 30 Minuten im Umluftofen getrocknet.

Die lackierten, getrockneten Prüfplatten werden in Anlehnung an die Prüfvorschrift nach VW AG TL 226 auf Cremebeständigkeit und Hydrolysebeständigkeit geprüft.

Dazu werden die zu prüfenden Platten nach der Lackierung und vor Prüfbeginn 48 Stunden bei +60 °C im Umluftwärmeschrank vorkonditioniert. So behandelt weisen die Beschichtungen gemäß Rezeptur 1 und Rezeptur 2 die für Automobil-Interieur-Teile üblichen Anfangseigenschaften auf.

Für die Durchführung der Cremebeständigkeitsprüfung wird auf die Beschichtungsoberfläche eine Mullbinde (ca. 3 x 3 cm) nach DIN 61631 gelegt und mit Prüfcreme Typ A und auf einer anderen Platte mit Prüfcreme Typ B (Prüfcremes A und B von Fa. Thierry GmbH, Stuttgart) aufgebracht. Die Creme wird durch die Mullbinde auf die Oberfläche gedrückt und verstrichen, so dass die Zwischenräume der Maschen mit der Creme gefüllt sind. Überschüssige Creme wird abgestrichen. Die so präparierte, beschichtete Platte wird mit der Mullbinde in einem Umluftwärmeschrank 24 Stunden bei 80 °C gelagert. Anschließend wird die Mullbinde entfernt und die restliche Creme mit einem Tuch abgewischt. Vor weiterer Prüfung und Bewertung der Oberfläche werden die Platten 4 Stunden bei Raumtemperatur (+18 °C bis +28 °C) konditioniert.

Es wird eine Gitterschnittprüfung nach DIN EN ISO 2409 mit anschließenden ruckartigem Klebebandabriss durchgeführt. Als Klebeband wird Tesa-Band 4657, Fa. Beiersdorf, verwendet.

### Anforderungen: Gitterschnittkennwerte ≤ 1

Zur Bewertung der Kratzbeständigkeit wird die Beschichtungsoberfläche der oben beschriebenen, konditionierten Platten mit dem Erichsen-Härteprüfstab Typ 318 bei 10 N Belastung und Prüfnadel nach Bosch gemäß DIN EN ISO 1518 geprüft. Der Durchmesser der Gravierspitze des Kratzstichels beträgt 0,75 mm.

Anforderungen: kein Aufreißen (Materialabtrag) der Lackierung bzw. Beschichtung zulässig; eine durch die Belastung im Substrat verursachte Eindruckspur ist erlaubt; die Beurteilung erfolgt visuell unter Normlicht nach DIN 6173 T1 und 2

Für die Durchführung der Prüfung der Hydrolysebeständigkeit werden die beschichteten Platten, ebenfalls nach vorheriger, oben beschriebener Vorkonditionierung (48 Stunden Lagerung bei 60 °C), 72 Stunden bei 90 +/-2 °C und ≥ 93 % relativer Luftfeuchte im Klimaschrank gelagert. Nach der Prüfung werden die Platten bis zur visuellen Beurteilung 30 Minuten bei Raumtemperatur +18 °C bis +28 °C konditioniert. Nach weiteren 30 Minuten Konditionierung erfolgt eine Gitterschnittprüfung nach DIN EN ISO 2409 mit anschließendem ruckartigem Klebebandabriss. Als Klebeband wird Tesa-Band 4657, Fa. Beiersdorf, verwendet.

### Anforderung: Gitterschnittkennwert ≤ 1

Weiterhin wird an diesen Platten eine Kratzbeständigkeitsprüfung durchgeführt. Dazu wird die Beschichtungsoberfläche mit dem Erichsen-Härteprüfstab Typ 318 bei 10 N Belastung und Prüfnadel nach Bosch geprüft. Der Durchmesser der Gravierspitze des Kratzstichels beträgt 0,75 mm.

Anforderungen: kein Aufreißen (Materialabtrag) der Lackierung zulässig; eine durch die Belastung im Substrat verursachte Eindruckspur ist erlaubt; die Beurteilung erfolgt visuell unter Normlicht nach DIN 6173 T1 und 2.

Weiterhin wird ein Kondenswasserkonstantklima-Test im Prüfklima CH nach DIN EN ISO 6270-2, Prüfdauer 240 Stunden, durchgeführt. Die Beurteilung erfolgt nach 30 Minuten Konditionierung bei Raumtemperatur nach DIN EN ISO 4628-2.

### Anforderung: keine Blasenbildung.

Die Anforderungen der zuvor beschriebenen Haftungs- und Kratzbeständigkeits-Prüfungen mußten ebenfalls erfüllt sein. Die Ergebnisse der durchgeführten Prüfungen sind in der folgenden Tabelle 1 dargestellt.

**Tabelle 1: Prüfergebnisse**

| | Rezeptur 1 erfindungsgemäß | Rezeptur 2 Vergleichsbeispiel |
|---|---|---|
| Cremebeständigkeitsprüfung | | |
| Erichsen-Ritzhärte prüfung (10 N) | kein Materialabtrag | kein Wert (1) |
| Gitterschnittprüfung | 0 | kein Wert (1) |
| Hydrolyseprüfung | | |
| Erichsen-Ritzhärte prüfung (10 N) | kein Materialabtrag | Materialabtrag bei 3 N |
| Gitterschnittprüfung | 0 | 3 - 5 |
| Kondenswasserkonstantklima-Test | keine Blasenbildung | keine Blasenbildung |

| | | |
|---|---|---|
| (1) Prüfung war nicht durchführbar, da die Beschichtungsoberfläche aufgequollen; Totalenthaftung vom Substrat | | |

## Patentansprüche

1. Beschichtungszusammensetzung enthaltend eine erste Komponente und eine zweite Komponente, **dadurch gekennzeichnet,**
**dass** die erste Komponente
10 bis 50 % (w/w) bezogen auf das Gesamtgewicht der ersten Komponente zumindest einer wässrigen Polyurethandispersion aufweisend Polyurethane mit aromatischen Strukturen, wobei die Polyurethandispersion einen aromatischen Anteil von 40 bis 60 % (w/w) bezogen auf das wasserfreie Polyurethan aufweist,
größer 0 bis 20 % (w/w) bezogen auf das Gesamtgewicht der ersten Komponente zumindest einen Glykolether als Co-Lösemittel und
größer 0 bis 20 % (w/w) bezogen auf das Gesamtgewicht der ersten Komponente zumindest eines weichmachenden Bindemittels enthält, und
**dass** die zweite Komponente
ein oder mehrere Isocyanate enthält,
wobei
die Beschichtungszusammensetzung weiterhin 1 bis 10 % (w/w) bezogen auf die Gesamtmasse der Zusammensetzung zumindest eines mattierungsmittels enthält, und
wobei die Beschichtungsstoffzusammensetzung frei von N-alkylierten Pyrrolidonen ist.

2. Beschichtungszusammensetzung nach Anspruch 1,
**dadurch gekennzeichnet, dass** die Zusammensetzung 20 bis 40, bevorzugt 25 bis 35 % (w/w) Polyurethandispersion enthält.

3. Beschichtungszusammensetzungen nach Anspruch 1 oder 2, **dadurch gekennzeichnet, dass** die Polyurethandispersion Polyurethane, Polyesterpolyurethane, Polyetherpolyurethane, Polycarbonatpolyurethane und/oder Polyacrylatpolyurethane enthält.

4. Beschichtungszusammensetzung nach einem der voranstehenden Ansprüche, **dadurch gekennzeichnet, dass** die Polyurethane aromatische Polyesterpolyurethane aufweisen, welche aus Monomeren hergestellt sind, wobei die Monomere zumindest aromatische Monomere sind gewählt aus ortho-Phthalsäure, Isophthalsäure, Terephthalsäure, Trimellitsäure, Bisphenol A, Bisphenol F, funktionalisierten und unfunktionalieierten Bisphenolen, difunktionellen Phenolen, Aniline, Bis-Anilinen, Naphthalinen, aromatisch substituierten Vinylverbindungen und deren Gemischen.

5. Beschichtungszusammensetzung nach einem der voranstehenden Ansprüche, **dadurch gekennzeichnet, dass** die Polyurethandispersionen frei von Triethylamin, Dimethylsulfoxid, Formaldehyd, PVC, Nitrocellulose, chlorierten und halogenierten Kohlenwasserstoffen ist.

6. Beschichtungsstoffzusammensetzung nach einem der voranstehenden Ansprüche, **dadurch gekennzeichnet, dass** die Zusammensetzung weiterhin bis zu 20 % (w/w) bezogen auf die Gesamtmasse der Zusammensetzung zumindest einer wässrigen Acrylatdispersion enthält.

7. Beschichtungsstoffzusammensetzung nach einem der voranstehenden Ansprüche, **dadurch gekennzeichnet, dass** die Zusammensetzung 5 bis 15 % (w/w) weichmachendes Bindemittel enthält.

8. Beschichtungsstoffzusammensetzung nach einem der voranstehenden Ansprüche, **dadurch gekennzeichnet, dass** das weichmachende Bindemittel ausgewählt ist aus Polyalkylenglykolen, polymeren und oligomeren Carbonsäurederivaten, Phosphorsäurederivaten, chlorierten Polyolefinen und unsubstituierten aliphatischen und aromatische Kohlenwasserstoffen.

9. Beschichtungszusammensetzung nach einem der voranstehenden Ansprüche, **dadurch gekennzeichnet, dass** das weichmachende Bindemittel ein Polyalkylenglykol aufweisend eine mittleren Molmasse von 200 bis 800 g/mol, bevorzugt 300 bis 600 g/mol, ist.

10. Beschichtungszusammensetzung nach Anspruch 9, **dadurch gekennzeichnet, dass** das Polyalkylenglykol mono-, di- oder höher funktionell bezogen auf gegenüber Isocyanat reaktive Protonen ist.

11. Beschichtungszusammensetzung nach einem der Ansprüche 9 oder 10, **dadurch gekennzeichnet, dass** das Polyalkylenglykol ein Polyethylenglykol ist.

12. Beschichtungamittel nach einem der voranstehenden Ansprüche, **dadurch gekennzeichnet, dass** die Zusammensetzung 2 bis 7 % (w/w), bevorzugt 3 bis 5 % (w/w), bezogen auf die Gesamtmasse der Zusammensetzung zumindest eines Mattierungemittels enthält.

13. Beschichtungszusammensetzung nach einem der voranstehenden Ansprüche, **dadurch gekennzeichnet, dass** die Mattierungsmittel ausgewählt sind aus Silikaten, Phenolharz-Kondensationsprodukten, Polyethylen-, Polyamid- und Polypropylenwachsen, perfluorierten Polymeren, Bienenwachsen, Carnaubawachsen, nicht kristallinen, natürlichen Kieselguren oder Diatomeenerden und deren Gemischen.

14. Beschichtungsstoffzusammensetzung nach einem der voranstehenden Ansprüche, **dadurch gekennzeichnet, dass** die Zusammensetzung 1 bis 15 % (w/w), bevorzugt 1 bis 8 % (w/w), des Co-Lösemittels enthält.

15. Beschichtungsstoffzusammensetzung nach einem der voranstehenden Ansprüche, **dadurch gekennzeichnet, dass** der Glykolether eine Molmasse unter 400 g/mol, bevorzugt unter 250 g/mol, aufweist.

16. Beschichtungsstoffzusammensetzung nach einem der voranstehenden Ansprüche, **dadurch gekennzeichnet, dass** das Co-Lösemittel ein Dimethylglykolether ist.

17. Verwendung der Beschichtungsstoffzusammensetzung nach einem der Ansprüche 1 bis 16 zum Beschichten von Holz-, Glas-, Keramik-, Metall- und/oder Kunststoffsubstraten.

18. Verwendung nach Anspruch 17 zum Beschichten von Kunststoffsubstraten hergestellt aus Kunststoffen gewählt aus Acryl-Butadien-Styrol Copolymerisat, Acryl-Butadien-Styrol Copolymerisat/Polycarbonat, Polycarbonat, Acrylnitril-Styrol-Acrylester, ungefülltem und gefülltem Polypropylen, ungefülltem und gefülltem Polyamid, Polyoxymethylen, Polybutylterephthalat, thermoplastische Polyester-Elastomere, Polypropylen/Ethylen-Propylen-Dien-Kautschuk und deren Gemischen.

## Claims

1. A coating composition containing a first component and a second component, **characterized in that** said first component contains from 10 to 50 w/w %, based on the total weight of said first component, of at least one aqueous polyurethane dispersion exhibiting polyurethanes having aromatic structures, wherein said polyurethane dispersion comprises an aromatic portion of from 40 to 60 w/w %, based on the anhydrous polyurethane, more than from 0 to 20 w/w %, based on the total weight of said first component, of at least one glycol ether as cosolvent and more than from 0 to 20 w/w %, based on the total weight of said first component, of at least one plasticizing binding agent, and that said second component contains one or more isocyanates, wherein said coating composition further contains from 1 to 10 w/w %, based on the total mass of the composition, of at least one flatting agent, and wherein said coating composition is free from N-alkylated pyrrolidones.

2. The coating composition as defined in claim 1, **characterized in that** said composition contains from 20 to 40 w/w % and preferably from 25 to 35 w/w % of polyurethane dispersion.

3. The coating compositions as defined in claim 1 or claim 2, **characterized in that** said polyurethane dispersion contains polyurethanes, polyester polyurethanes, polyether polyurethanes, polycarbonate polyurethanes, and/or polyacrylate-polyurethanes.

4. The coating composition as defined in any one of the previous claims, **characterized in that** said polyurethanes comprise aromatic polyester polyurethanes, which are produced from monomers, wherein said monomers are at least aromatic monomers selected from the group consisting of orthophthalic acid, isophthalic acid, terephthalic acid, trimellitic acid, bisphenol A, bisphenol P, functionalized and unfunctionalized bisphenols, difunctional phenols, anilines, bis-anilines, naphthalenes, aromatic substituted vinyl compounds, and mixtures thereof.

5. The coating composition as defined in any one of the previous claims, **characterized in that** said polyurethane dispersion is free from triethylamine, dimethyl sulfoxide, formaldehyde, PVC, cellulose nitrate, and from chlorinated and halogenated hydrocarbons.

6. The coating composition as defined in any one of the previous claims, **characterized in that** said composition further contains up to 20 w/w %, based on the total mass of said composition, of at least one aqueous acrylate dispersion.

7. The coating composition as defined in any one of the previous claims, **characterized in that** said composition contains from 5 to 15 w/w % of plasticizing binding agent.

8. The coating composition as defined in any one of the previous claims, **characterized in that** said plasticizing binding agent is selected from the group consisting of polyalkylene glycols, polymeric and oligomeric carboxylic acid derivatives, phosphoric acid derivatives, chlorinated polyolefins, and unsubstituted aliphatic and aromatic hydrocarbons.

9. The coating composition as defined in any one of the previous claims, **characterized in that** said plasticizing binding agent is a polyalkylene glycol exhibiting an average molar mass of from 200 to 800 g/mol and preferably from 300 to 600 g/mol.

10. The coating composition as defined in claim 9, **characterized in that** said polyalkylene glycol is monofunctional, difunctional, or polyfunctional, based on isocyanate-reactive protons.

11. The coating composition as defined in claim 9 or claim 10, **characterized in that** said polyalkylene glycol is a polyethylene glycol.

12. The coating composition as defined in any one of the previous claims, **characterized in that** said composition contains from 2 to 7 w/w % % and preferably from 3 to 5 w/w %, based on the total mass of the composition, of at least one flatting agent.

13. The coating composition as defined in any one of the previous claims, **characterized in that** said flatting agents are selected from the group consisting of silicates, phenolic resin condensation products, polyethylene waxes, polyamide waxes, and polypropylene waxes, perfluorinated polymers, beeswaxes, carnauba waxes, non-crystalline, natural kieselguhrs or diatomaceous earths, and mixtures thereof.

14. The coating composition as defined in any one of the previous claims, **characterized in that** said composition contains from 1 to 15 w/w % % and preferably from 1 to 8 w/w %, of said cosolvent.

15. The coating composition as defined in any one of the previous claims, **characterized in that** said glycol ether has a molar mass of less than 400 g/mol and preferably less than 250 g/mol.

16. The coating composition as defined in any one of the previous claims, **characterized in that** said cosolvent is a dimethyl glycol ether.

17. The use of the coating composition as defined in any one of claims 1 to 16 for coating substrates of wood, glass, ceramics, metal, and/or plastics.

18. The use as defined in claim 17 for coating plastics substrates produced from plastics materials selected from the group consisting of acrylic butadiene styrene copolymer, acrylic butadiene styrene polycarbonate copolymer, polycarbonate, acrylic styrene acrylate, unfilled and filled polypropylene, unfilled and filled polyamide, polyoxymethylene, polybutyl terephthalate, thermoplastic polyester elastomers, polypropylene ethylene propylene diene rubber, and mixtures thereof.

## Revendications

1. Composition de revêtement contenant un premier composant et un deuxième composant, **caractérisée en ce que**
le premier composant comprend
10 à 50 % (poids/poids), par rapport au poids total du premier composant, d'au moins une dispersion de polyuréthane aqueuse présentant des polyuréthanes ayant des structures aromatiques, où la dispersion de polyuréthane présente une fraction aromatique de 40 à 60 % (poids/poids) par rapport au polyuréthane anhydre,
plus de 0 à 20 % (poids/poids), par rapport au poids total du premier composant, d'au moins un éther de glycol comme co-solvant et
plus de 0 à 20 % (poids/poids), par rapport au poids total du premier composant, d'au moins un liant plastifiant, et
**en ce que** le deuxième composant comprend un ou plusieurs isocyanates,
la composition de revêtement comprend en plus 1 à 10 % (poids/poids), par rapport au poids total de la composition, d'au moins un agent matifiant, et
la composition de revêtement étant exempte de pyrrolidones N-alkylées.

2. Composition de revêtement selon la revendication 1, **caractérisée en ce que** la composition comprend 20 à 40, de préférence 25 à 35 % (poids/poids) de la dispersion de polyuréthane.

3. Compositions de revêtement selon la revendication 1 ou 2, **caractérisées en ce que** la dispersion de polyuréthane comprend des polyuréthanes, des polyuréthanes de polyester, des polyéther-polyuréthanes, des polyuréthanes de polycarbonate et/ou des polyuréthanes de polyacrylate.

4. Composition de revêtement selon l'une des revendications précédentes, **caractérisée en ce que** les polyuréthanes présentent des polyuréthanes de polyester aromatiques qui sont préparés à partir de monomères, les monomères, du moins les monomères aromatiques, étant choisis parmi l'acide orthophtalique, l'acide isophtalique, l'acide téréphtalique, l'acide trimellitique, le bisphénol A, le bisphénol F, les bisphénols fonctionnalisés et non fonctionnalisés, les phénols difonctionnels, les anilines, les bisanilines, les naphtalines, les composés vinyliques substitués sur le plan aromatique et leurs mélanges.

5. Composition de revêtement selon l'une des revendications précédentes, **caractérisée en ce que** les dispersions de polyuréthane sont exemptes de triéthylamine, de diméthylsulfoxyde, de formaldéhyde, de PVC, de nitrocellulose, d'hydrocarbures chlorés et halogénés.

6. Composition de revêtement selon l'une des revendications précédentes, **caractérisée en ce que** la composition comprend en plus jusqu'à 20 % (poids/poids), par rapport au poids total de la composition, d'au moins une dispersion aqueuse d'acrylate.

7. Composition de revêtement selon l'une des revendications précédentes, **caractérisée en ce que** la composition comprend 5 à 15 % (poids/poids) de liant plastifiant.

8. Composition de revêtement selon l'une des revendications précédentes, **caractérisée en ce que** le liant plastifiant est choisi parmi les polyalkylène glycols, les dérivés d'acide carboxylique polymères et oligomères, les dérivés d'acide phosphorique, les polyoléfines chlorées et les hydrocarbures aliphatiques et aromatiques non substitués.

9. Composition de revêtement selon l'une des revendications précédentes, **caractérisée en ce que** le liant plastifiant est un polyalkylène glycol, présentant une masse molaire moyenne de 200 à 800 g/mol, de préférence 300 à 600 g/mol.

10. Composition de revêtement selon la revendication 9, **caractérisée en ce que** le polyalkylène glycol est mono-, di-fonctionnel ou a une fonction supérieure par rapport aux protons réactifs à l'isocyanate.

11. Composition de revêtement selon l'une des revendications 9 ou 10, **caractérisée en ce que** le polyalkylène glycol est un polyéthylène glycol.

12. Agent de revêtement selon l'une des revendication précédentes, **caractérisé en ce que** la composition comprend 2 à 7 % (poids/poids), de préférence 3 à 5 % (poids/poids), par rapport au poids total de la composition, d'au moins un agent matifiant.

13. Composition de revêtement selon l'une des revendications précédentes, **caractérisée en ce que** les agents matifiants sont choisis parmi les silicates, les produits de condensation de la résine phénolique, les cires de poléthylène, polyamide et polypropylène, les polymères perfluorés, les cires d'abeilles, les cires de carnauba, les kieselguhrs ou terres de diatomée non cristallines, naturelles et leurs mélanges.

14. Composition de revêtement selon l'une des revendications précédentes, **caractérisée en ce que** la composition comprend 1 à 15 % (poids/poids), de préférence 1 à 8 % (poids/poids), du co-solvant.

15. Composition de revêtement selon l'une des revendications précédentes, **caractérisée en ce que** l'éther de glycol présente une masse molaire inférieure à 400 g/mol, de préférence inférieure à 250 g/mol.

16. Composition de revêtement selon l'une des revendications précédentes, **caractérisée en ce que** le co-solvant est un diméthyléther de glycol.

17. Utilisation de la composition de revêtement selon l'une des revendications 1 à 16 pour le revêtement de substrats en bois, verre, céramique, métal et/ou plastique.

18. Utilisation selon la revendication 17 pour le revêtement de substrats en plastique fabriqués à partir de plastiques choisis parmi le copolymère d'acrylobutadiène - styrène, le copolymère d'acrylobutadiène - styrène/ polycarbonate, le polycarbonate, l'acrylonitrile - styrène - ester d'acide acrylique, le polypropylène chargé et non chargé, le polyamide chargé et non chargé, le polyoxyméthylène, le polybutyltéréphtalate, les élastomères de polyester thermoplastique, le caoutchouc de polypropylène / éthylène - propylène - diène et leurs mélanges.
